# FASCICULE DE BREVET EUROPEEN

(11) **EP 0 840 097 B1**
(45) Date de publication et mention de la délivrance du brevet: **11.09.2002**
(21) Numéro de dépôt: 97402462.2
(22) Date de dépôt: 17.10.1997
(51) Int. Cl.: G01D 5/39, G01D 5/26, G02B 6/04, G02B 23/26

(54) **Lame de support et de déplacement d'un dispositif d'examen ou de contrôle, procédé de fabrication de la lame et son utilisation**
Bewegliche Trägervorrichtung für eine Untersuchungs- oder Kontrollvorrichtung, sowie Verfahren zu deren Herstellung und Verwendung
Movable support member for an examining or controlling device, method for its manufacture and use thereof

(30) Priorité: 30.10.1996 FR 9613273
(43) Date de publication de la demande: 06.05.1998
(73) Titulaire: FRAMATOME, 92400 Courbevoie (FR)
(72) Inventeur: Cayment, Michel, 46130 Cornac (FR)
(74) Mandataire: Bouget, Lucien

(56) Documents cités:
- EP-A- 0 425 915
- US-A- 5 192 278
- PATENT ABSTRACTS OF JAPAN vol. 11, no. 223 (P-597), 21 juillet 1987 & JP 62 039813 A (SUMITOMO ELECTRIC IND LTD), 20 février 1987,
- PATENT ABSTRACTS OF JAPAN vol. 14, no. 149 (C-0705), 22 mars 1990 & JP 02 019129 A (TOSHIBA CORP), 23 janvier 1990,
- "Fiber-Optic Cable Adaptable to Fault Isolation" IBM TECHNICAL DISCLOSURE BULLETIN, vol. 27, no. 1a, juin 1984, US, pages 130-132, XP002034446
- PATENT ABSTRACTS OF JAPAN vol. 8, no. 275 (P-321), 15 décembre 1984 & JP 59 143105 A (FURUKAWA DENKI KOGYO KK), 16 août 1984,
- PATENT ABSTRACTS OF JAPAN vol. 18, no. 281 (P-1744), 27 mai 1994 & JP 06 051141 A (MITSUBISHI RAYON CO LTD), 25 février 1994,

## Description

L'invention concerne une lame de support et de déplacement d'un dispositif d'examen ou de contrôle dans un passage exigu et non rectiligne, un procédé de fabrication de la lame et son utilisation pour réaliser l'examen optique d'un élément d'un mécanisme de déplacement d'une barre de commande d'un réacteur nucléaire refroidi par de l'eau sous pression.

Les réacteurs nucléaires refroidis par de l'eau sous pression comportent, à l'intérieur d'une cuve, un coeur constitué par des assemblages de combustible. Pour régler la réactivité du coeur, il est connu de déplacer, à l'intérieur de certains des assemblages du coeur, des grappes de crayons renfermant un matériau absorbant les neutrons, appelées barres de commande.

Pour déplacer les barres de commande à l'intérieur du coeur, on utilise des mécanismes qui comportent des cliquets venant en prise avec des dents usinées avec un certain espacement suivant la longueur d'une tige de commande à laquelle est fixée la barre de commande.

Les barres de commande sont généralement introduites par la partie supérieure du coeur du réacteur nucléaire et les tiges de commande traversent le couvercle du réacteur à l'intérieur d'adaptateurs tubulaires qui comportent une extrémité supérieure à l'extérieur de la cuve sur laquelle est fixé le mécanisme de déplacement de la barre de commande.

Les mécanismes de barres de commande comportent des bobinages électromagnétiques permettant de déplacer la barre de commande et de manoeuvrer les cliquets pour les mettre en prise avec les dents de la tige de commande ou, au contraire, pour libérer la tige de commande, pendant les phases successives du déplacement de la barre de commande.

L'un des ensembles de cliquets venant en prise avec la barre de commande est monté sur un élément mobile dans la direction axiale à l'intérieur du carter renfermant les mécanismes.

Un second ensemble de cliquets est monté pivotant sur un élément monté fixe à l'intérieur du carter du mécanisme. Ce second ensemble de cliquets constitue un ensemble de maintien de la tige de commande en position dans la direction verticale, entre deux pas de déplacement de cette tige de commande.

Chacun des mécanismes comporte, autour d'un carter de forme sensiblement cylindrique, une première bobine électromagnétique assurant le déplacement de la barre de commande, une seconde bobine électromagnétique assurant la manoeuvre des cliquets fixés sur l'élément mobile et une troisième bobine de manoeuvre des cliquets montée en position fixe dans la direction axiale du mécanisme.

Les bobines électromagnétiques du mécanisme assurent le déplacement, à l'intérieur de l'alésage du carter, d'éléments de forme annulaire appelé plongeur.

Les plongeurs sont déplacés vers le haut par attraction magnétique, lors de l'alimentation des bobinages correspondants et rappelés vers le bas par des ressorts et sous l'effet de la pesanteur.

Les cliquets de l'ensemble de cliquets de maintien sont montés pivotants autour d'axes horizontaux sur une pièce tubulaire fixe montée dans une disposition coaxiale à l'intérieur du carter des mécanismes. Les cliquets sont manoeuvrés par l'intermédiaire de biellettes qui sont articulées chacune à l'une de leurs extrémités sur un cliquet et à leur autre extrémité sur un plongeur des cliquets de maintien. Par déplacement dans la direction verticale du plongeur, dans un sens ou dans l'autre, sous l'effet de l'attraction magnétique ou de la force de ressorts de rappel et de la pesanteur, chacun des cliquets de l'ensemble de cliquets de maintien peut être déplacé, par l'intermédiaire de la biellette correspondante, entre une position d'engagement sur la denture de la tige de commande et une position de retrait dans laquelle les cliquets de l'ensemble de maintien libèrent la tige de commande qui peut être déplacée alors dans la direction verticale.

Pour permettre le montage du plongeur des cliquets de maintien à l'intérieur du carter du mécanisme, autour du support des cliquets de maintien solidaires du carter, le plongeur des cliquets de maintien est réalisé en deux parties de forme tubulaire qui sont raccordées bout à bout dans une disposition coaxiale par l'intermédiaire de deux extrémités d'assemblage qui sont vissées l'une sur l'autre et immobilisées l'une par rapport à l'autre, par l'intermédiaire d'une vis engagée dans des ouvertures alignées des deux parties du plongeur ayant une direction radiale par rapport aux pièces tubulaires constituant le plongeur.

La vis de blocage des deux parties du plongeur est immobilisée en rotation par déformation d'une coupelle sertie dans l'une des pièces, à l'intérieur d'embrèvements usinés dans la tête de la vis. La partie de la pièce recevant la tête de vis présente une surface externe placée en vis-à-vis de la surface interne du carter et séparée de celle-ci par un jeu faible de l'ordre de 3 mm.

Dans le cas de certains réacteurs nucléaires actuellement en fonctionnement, on a observé certains dysfonctionnements de mécanisme de barres de commande qui sont dus, au moins en partie, au desserrage de la vis de blocage des plongeurs de cliquets de maintien. En effet, dans certains cas, la vis de blocage a pu se desserrer, du fait d'un désertissage de sa tête engagée à l'intérieur de la partie du plongeur située en vis-à-vis de la surface intérieure du carter. Dans ce cas, la tête de vis vient en saillie par rapport à la surface extérieure de la pièce du plongeur et est susceptible, du fait du faible jeu existant entre la surface externe du plongeur et la surface intérieure du carter, de venir frotter contre cette surface intérieure.

Il est donc souhaitable de pouvoir contrôler périodiquement que la vis de blocage des plongeurs des cliquets de maintien des mécanismes de barres de commande d'un réacteur nucléaire ne se trouve pas en saillie par rapport à la surface du plongeur et présente une tête qui est correctement sertie à l'intérieur de la partie externe du plongeur.

Ce contrôle, qui doit être effectué de préférence par examen optique, doit être réalisé sans démonter le mécanisme ; la zone où se trouve la vis de blocage n'est accessible que par l'intermédiaire de l'espace annulaire de faible largeur (cette largeur correspondant au jeu radial entre les plongeurs et la surface interne du carter du mécanisme) et d'une ouverture d'accès à cet espace annulaire débouchant, à l'une de ses extrémités, dans l'espace annulaire et, à son autre extrémité, à la partie inférieure du mécanisme.

Pour faire parvenir un dispositif d'examen optique dans l'espace annulaire, au voisinage de la vis de blocage qui se trouve à une distance de l'ordre de 150 mm de la partie inférieure du carter du mécanisme, il est nécessaire de disposer d'un moyen de support et de déplacement du dispositif d'examen optique qui puisse être engagé dans un espace exigu (l'ouverture d'accès à l'espace annulaire du mécanisme présente une largeur de l'ordre de 1,6 mm) et déplacé suivant un parcours présentant un changement de direction.

Une autre difficulté provient également du fait que la zone dans laquelle est située la vis de blocage ne se trouve pas dans l'alignement axial de l'ouverture d'accès.

Les adaptateurs de traversée du couvercle de la cuve d'un réacteur nucléaire à eau sous pression dans lesquels passe la tige de commande assurant le déplacement d'une barre de commande par l'intermédiaire d'un mécanisme comportent une chemise thermique placée à l'intérieur de l'adaptateur dans une disposition coaxiale, avec un faible jeu radial par rapport à la surface intérieure de l'adaptateur.

Dans certains réacteurs nucléaires, on a observé une fissuration sur la surface intérieure des adaptateurs, en particulier dans leur zone de soudure avec le couvercle.

Il s'est donc avéré nécessaire de concevoir des dispositifs permettant de réaliser l'examen de la surface intérieure de l'adaptateur. On a réalisé en particulier des dispositifs comportant une lame allongée de faible épaisseur et présentant une certaine souplesse à l'extrémité de laquelle on fixe un dispositif de contrôle, par exemple par ultrasons ou par courants de Foucault. Le dispositif de contrôle peut être déplacé à l'intérieur de l'espace annulaire entre la chemise thermique et la surface intérieure de l'adaptateur, par poussée et par traction sur la lame souple de grande longueur. Des dispositifs de rappel élastique permettent de plaquer la ou les sondes utilisées fixées à l'extrémité de la lame contre la surface intérieure de l'adaptateur.

Des conducteurs constitués par des fils ou des câbles de mesures fixés sur la lame ou sabre suivant sa direction longitudinale permettent d'alimenter les sondes et de recueillir les signaux de mesure par l'intermédiaire d'une partie d'extrémité de la lame restant à l'extérieur de l'adaptateur, après introduction et mise en position de la sonde dans l'espace annulaire de l'adaptateur.

On a proposé d'utiliser des lames ou sabres constituées par des bandes plates métalliques ou des bandes stratifiées sur lesquelles sont fixés des conducteurs électriques suivant toute la longueur du sabre.

On a essayé d'utiliser de telles lames ou sabres pour réaliser l'examen optique des vis d'assemblage des plongeurs de cliquets de maintien des mécanismes de déplacement des barres de commande d'un réacteur nucléaire.

Du fait, en particulier, de la faible largeur du passage d'entrée et de la présence d'un changement de direction sur le passage de la lame ou sabre, un blocage a tendance à se produire lorsque le dispositif d'examen fixé à l'extrémité du sabre parvient dans l'espace annulaire du mécanisme. Il peut être alors très difficile sinon impossible d'extraire le dispositif d'examen optique du passage annulaire, l'augmentation de la force de traction sur le sabre pouvant entraîner une rupture du sabre. Il est alors difficile sinon impossible de récupérer le dispositif d'examen optique et la partie d'extrémité du sabre introduite dans l'espace annulaire du mécanisme.

En outre, lorsqu'un dispositif d'examen optique fixé à l'extrémité du sabre doit être relié à des moyens d'exploitation de signaux optiques et de reconstitution d'images, par l'intermédiaire de faisceaux de fibres optiques fixés suivant la direction longitudinale du sabre, dans le cas où les faisceaux sont fixés sur une des faces du sabre, les fibres constituant ces faisceaux peuvent venir en contact frottant avec certaines parties des mécanismes, pendant le déplacement du sabre pour la mise en place ou l'extraction du dispositif d'examen optique. Les fibres risquent d'être détériorées par usure ou par sectionnement, en particulier lorsqu'elles viennent en contact avec des arêtes vives des mécanismes.

On connaît par les JP-A-62 033 813 et JP-A-02 019 129, des cathéters pour endoscopes utilisés pour l'examen de cavités dans le corps humain et pour effectuer certains traitements. Le cathéter comporte une pluralité de conducteurs pour l'alimentation de l'endoscope et la récupération de signaux, enrobés dans une matière plastique dont est constitué le cathéter. De tels cathéters ne sont pas adaptés à l'examen de pièces mécaniques difficilement accessibles.

Le but de l'invention est donc de proposer une lame de support et de déplacement dans un passage exigu et non rectiligne, d'un dispositif d'examen ou de contrôle d'un élément d'une installation industrielle accessible par le passage exigu, fixé à l'une des extrémités longitudinales de la lame de support et relié, pour son alimentation et pour la récupération de signaux, à une pluralité de conducteurs disposés suivant la longueur de la lame, cette lame présentant des caractéristiques de souplesse et de résistance permettant d'éviter des blocages ou des ruptures lors de son déplacement dans le passage exigu et assurant une protection efficace des conducteurs disposés suivant sa longueur.

Dans ce but, la lame de support et de déplacement suivant l'invention est constituée par une pièce monobloc en une matière plastique moulée, ayant une résistance à la traction comprise entre 20 et 80 daN et de préférence de l'ordre de 45 daN, ainsi qu'un coefficient de frottement sur l'acier inférieur à 0,1 et une forte résistance à l'usure dans le cas d'un frottement avec une surface métallique, les conducteurs reliés au dispositif de contrôle étant entièrement enrobés dans la matière plastique de la lame, sur toute la longueur de la lame.

De préférence, la matière plastique moulée de la lame est un polyuréthanne.

L'invention concerne également le procédé de réalisation par moulage de la lame de support et de déplacement.

L'invention est également relative à l'utilisation de la lame pour effectuer l'examen optique d'un élément disposé à l'intérieur d'un mécanisme de déplacement d'une barre de commande d'un réacteur nucléaire à eau sous pression et en particulier d'une vis de blocage de deux parties d'un plongeur du mécanisme.

Afin de bien faire comprendre l'invention, on va maintenant décrire à titre d'exemple non limitatif, en se référant aux figures jointes en annexe, une lame de support et de déplacement suivant l'invention, son procédé de fabrication et son utilisation pour réaliser un examen optique d'une vis de blocage de deux pièces d'un plongeur d'un mécanisme de déplacement d'une barre de commande d'un réacteur nucléaire à eau sous pression.

La figure 1 est une vue en perspective éclatée d'un mécanisme de déplacement d'une barre de commande d'un réacteur nucléaire à eau sous pression.

La figure 2 est une vue en coupe et en élévation de la partie inférieure d'un mécanisme fixé sur un adaptateur de traversée du couvercle de cuve du réacteur nucléaire.

La figure 3 est une vue en coupe agrandie de la partie inférieure du mécanisme représenté sur la figure 2.

La figure 3A est une vue agrandie du détail A de la figure 3.

La figure 3B est une vue suivant B de la figure 3A.

Les figures 4A et 4B sont des vue en plan d'une lame de support et de déplacement suivant l'invention et suivant deux variantes de réalisation.

La figure 5 est une vue en coupe suivant 5-5 de la figure 4A ou de la figure 4B.

La figure 6 est une vue en coupe suivant 6-6 de la figure 4A ou de la figure 4B.

La figure 7 est une vue en coupe suivant 7-7 de la figure 4A ou de la figure 4B.

La figure 8 est une vue en plan d'une partie interne de la lame de support représentée sur la figure 4A ou sur la figure 4B.

La figure 9 est une vue en perspective d'un moule ouvert contenant un insert, illustrant l'une des phases du procédé de fabrication par moulage de la lame de support telle que représentée sur les figures 4A et 4B.

Les figures 9A et 9B sont des vues en coupe suivant A-A et B-B de la figure 9, respectivement, montrant le moule de la figure 9 fermé par un couvercle.

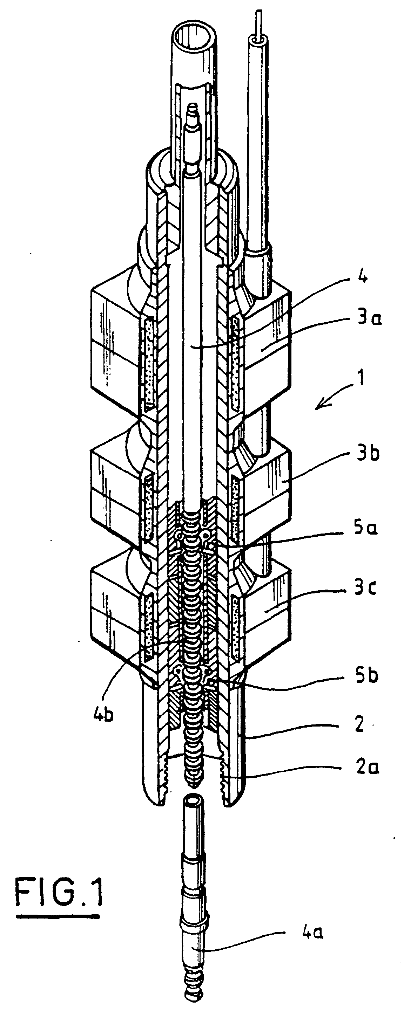

Sur la figure 1, on voit un mécanisme de déplacement d'une barre de commande d'un réacteur nucléaire à eau sous pression désigné de manière générale par le repère 1.

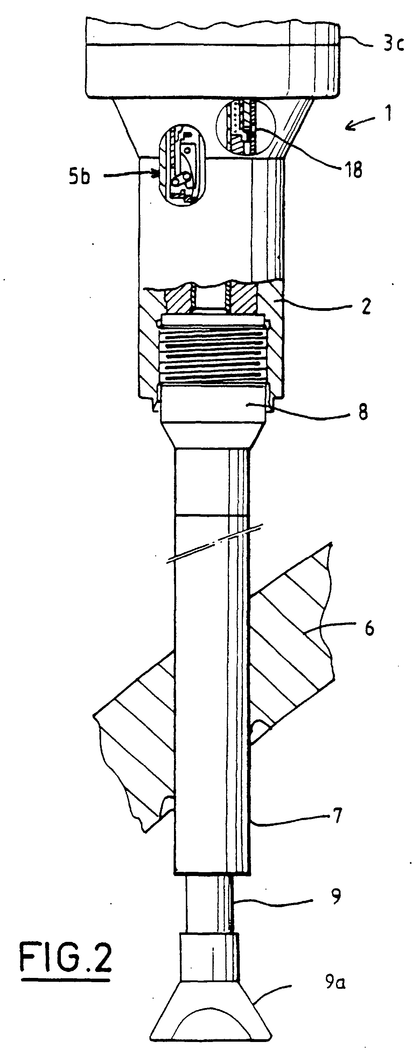

Le mécanisme comporte un carter tubulaire 2 de forme sensiblement cylindrique dont la partie inférieure présente un taraudage 2a permettant de réaliser la fixation du mécanisme sur la partie supérieure filetée d'un adaptateur de traversée du couvercle de la cuve du réacteur, comme représenté sur la figure 2.

Le mécanisme 1 comporte de plus trois bobines électromagnétiques d'actionnement 3a, 3b et 3c permettant de déplacer des pièces en matériau ferromagnétique disposées dans l'alésage intérieur du carter 2.

Les pièces ferromagnétiques dont le déplacement est commandé par les bobinages 3a, 3b et 3c sont de forme tubulaire et sont montées autour d'une partie fixe du mécanisme solidaire du carter 2 dans laquelle est montée glissante dans la direction verticale une tige de commande 4 comportant une partie inférieure 4a qui comporte des moyens de fixation d'une grappe absorbante constituant la barre de commande dont le mécanisme 1 assure le déplacement dans le coeur du réacteur nucléaire.

La tige de commande 4 comporte une partie 4b usinée pour présenter des gorges successives, dans la direction axiale, délimitant entre elles des dents pour le déplacement pas à pas de la tige de commande à laquelle est fixée une barre de commande.

Le déplacement de la barre de commande, dans la direction verticale, pas par pas, est assuré par l'ensemble électromagnétique 3a constituant un ensemble de levée de la barre de commande et deux grappins 5a et 5b constitués par un ensemble de cliquets qui sont commandés par les bobinages 3b et 3c pour venir en prise avec la denture 4b de la tige de commande 4 ou pour libérer la tige de commande.

Les cliquets du grappin 5a sont fixés sur une pièce mobile qui accompagne la tige de commande 4 lors de son levage et qui est rappelée dans sa position initiale à l'issue d'un déplacement élémentaire de la tige de commande.

Les cliquets du grappin 5b sont des cliquets de maintien qui assurent le maintien de la tige de commande 4 et de la grappe fixée à cette tige entre deux déplacements d'un pas de la tige de commande.

Sur la figure 2, on a représenté une partie du couvercle 6 de la cuve d'un réacteur nucléaire dans laquelle est fixé un tube de traversée 7 ou adaptateur assurant le passage à l'intérieur de la cuve d'une tige de commande telle que la tige 4 représentée sur la figure 1 et permettant le déplacement d'une grappe de commande à l'intérieur d'un assemblage du coeur du réacteur nucléaire disposé dans la cuve fermée par le couvercle 6.

L'adaptateur 7 comporte, à sa partie supérieure, au-dessus du couvercle 6, une partie 8 élargie diamétralement présentant un filetage externe sur lequel peut être vissé le carter 2 d'un mécanisme 1 de déplacement d'une barre de commande.

A l'intérieur de l'adaptateur 7 est disposée une manchette thermique 9 comportant, à sa partie inférieure, une tulipe 9a permettant d'assurer un réengagement des tiges de commande dans les adaptateurs correspondants, lors d'une remise en place du couvercle de la cuve, après un arrêt du réacteur nucléaire.

La partie inférieure du mécanisme 1, qui est représentée sur la figure 2, comporte en particulier la bobine 3c d'actionnement des cliquets de maintien et l'ensemble 5b des cliquets de maintien.

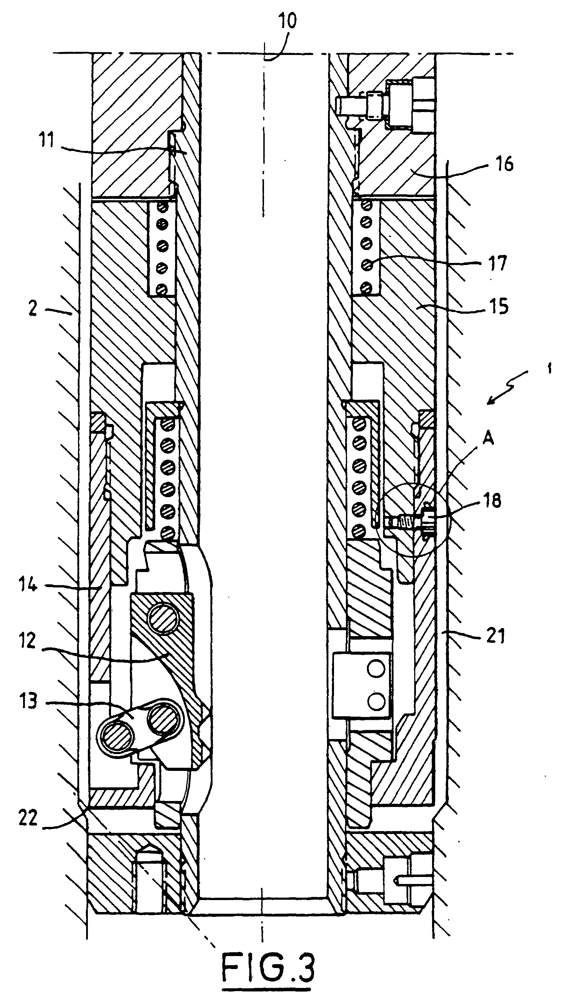

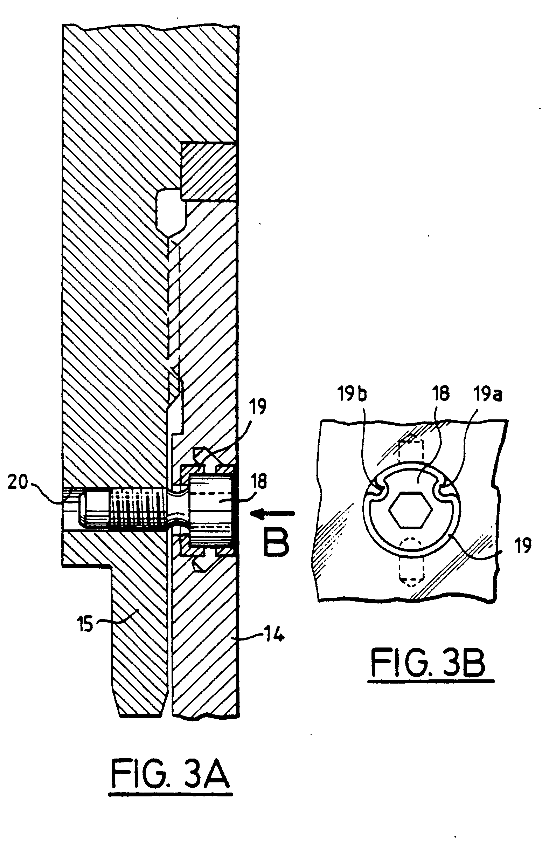

Cette partie du mécanisme a été représentée plus en détail sur la figure 3.

Dans l'alésage du carter 2 ayant pour axe l'axe vertical 10 est fixé, dans une disposition coaxiale par rapport au carter, un support tubulaire 11 sur lequel sont montés pivotants, par l'intermédiaire d'un axe horizontal de pivotement, les cliquets de maintien tels que le cliquet 12 représenté sur la figure 3. Chaque jeu de cliquets comporte trois cliquets disposés à 120° l'un de l'autre autour de l'axe 10.

Autour du support tubulaire 11 et de l'ensemble de cliquets de maintien, sont fixées des pièces ferromagnétiques ou plongeurs permettant la commande de chacun des cliquets de maintien, par l'intermédiaire d'une biellette 13 articulée à l'une de ses extrémités sur un cliquet et à son autre extrémité sur une pièce 14 de forme tubulaire du plongeur des cliquets de maintien.

La pièce 14 du cliquet de maintien est fixée par vissage sur une seconde pièce tubulaire 15, dans une disposition coaxiale.

La seconde pièce 15 du plongeur de cliquets de maintien constitue la pièce polaire du plongeur qui est attirée par une pièce métallique fixe 16, lorsqu'on alimente le bobinage magnétique 3c des cliquets de maintien.

De plus, le plongeur est rappelé vers le bas par un ressort 17 intercalé entre la pièce fixe 16 solidaire du support tubulaire 11 et la pièce polaire 15 du plongeur des cliquets de maintien.

De manière à assurer une immobilisation des deux pièces 14 et 15 du plongeur des cliquets de maintien, on engage une vis de blocage 18 dans des ouvertures alignées des pièces 14 et 15, après leur assemblage par vissage.

Comme il est visible sur les figures 3A et 3B, la pièce 14 est traversée par une ouverture dans laquelle est introduite et fixée par sertissage une coupelle 19 en tôle métallique dans laquelle est engagée la tête de la vis 18 qui est vissée à l'intérieur d'une ouverture taraudée 20 traversant une partie de la pièce 15 venant en vis-à-vis de l'ouverture de la pièce 14 lorsqu'on a réalisé l'assemblage par vissage des pièces 14 et 15.

On réalise le blocage en rotation de la vis 18 par déformation et sertissage de deux parties 19a et 19b de la coupelle 19 dans deux embrèvements de la tête de la vis 18.

Bien que la vis 18 de blocage des deux parties 14 et 15 du plongeur des cliquets de maintien soit fixée par sertissage de la coupelle, on a observé dans certains cas, pendant le fonctionnement du réacteur nucléaire, un dysfonctionnement du mécanisme ayant pour origine un desserrage de la vis 18 qui peut être dû par exemple à un mauvais sertissage de la coupelle 19 ou à une détérioration de la coupelle 19 en service.

Dans ce cas, la tête de la vis 18 peut venir en saillie à l'intérieur de l'espace libre 21 ménagé entre la surface extérieure des pièces 14 et 15 du plongeur et la surface intérieure du carter 2 du mécanisme 1. Du fait que l'espace libre 21 présente une faible largeur dans la direction radiale, de l'ordre de 3 mm, la tête de vis peut être amenée à venir frotter contre la surface intérieure du carter 2 du mécanisme, ce qui peut perturber ou empêcher le déplacement des pièces polaires 14 et 15 actionnant les cliquets de maintien 12.

Un tel fonctionnement défectueux est particulièrement indésirable lorsqu'il empêche une barre de commande de retomber en position d'insertion maximale dans le coeur du réacteur nucléaire en cas d'arrêt d'urgence.

Il s'est donc avéré tout à fait souhaitable de vérifier l'état de serrage et de sertissage des vis 18 d'assemblage des plongeurs des cliquets de maintien des mécanismes de barres de commande des réacteurs nucléaires à eau sous pression.

Ce contrôle peut être réalisé par examen optique, de manière à contrôler la position de la tête de la vis 18 et à vérifier que cette tête ne se trouve pas en saillie par rapport à la surface extérieure des pièces de plongeurs de cliquets de maintien 14 et 15.

Il est également souhaitable d'effectuer un contrôle du sertissage de la coupelle d'immobilisation de la tête de vis.

Il est donc nécessaire de réaliser un examen optique avec une visée dans la direction axiale du mécanisme, au voisinage de la vis 18, pour voir si la tête de vis ne se trouve pas en saillie par rapport à la surface externe des pièces 14 et 15 et avec une visée radiale en direction de la tête de vis 18 pour contrôler l'état de sertissage de la coupelle 19, l'image optique étant analogue à la vue de la figure 3B.

Pour réaliser ces examens optiques au niveau de la tête de la vis 18, dans l'espace annulaire 21, il est nécessaire d'introduire un moyen d'éclairage et une micro-caméra vidéo ou encore des éléments optiques de captage d'images d'une caméra, dans le jeu 21, jusqu'au niveau de la vis 18, c'est-à-dire à une distance de l'ordre de 150 mm de la base du mécanisme.

L'introduction d'un moyen d'examen optique ne peut se faire que par l'intérieur de la manchette thermique 9 de l'adaptateur 7 sur lequel est fixé le mécanisme 1, après arrêt et refroidissement du réacteur nucléaire et démontage du couvercle qui est déposé sur un support, dans un local équipé d'un bras de manutention permettant d'introduire un appareillage d'examen à l'intérieur des manchettes thermiques de chacun des adaptateurs de traversée du couvercle, successivement. Dans cette position permettant le contrôle des adaptateurs en particulier, le couvercle est placé horizontalement sur le support, de sorte que les adaptateurs sont disposés verticalement.

Des essais ont été réalisés en utilisant des éléments de caméra fixés à l'extrémité d'une lame métallique plate d'un type déjà utilisé pour réaliser le contrôle de la surface intérieure d'adaptateurs de traversée d'un couvercle de cuve à l'aide d'une sonde introduite dans l'espace annulaire entre la manchette thermique et l'adaptateur.

Une telle lame métallique ou sabre présente une faible épaisseur comprise entre 1 et 2 mm et une largeur de l'ordre 10 à 15 mm. La longueur de la lame doit être suffisante pour qu'on puisse faire parvenir le dispositif d'examen optique dans la zone de la vis 18, depuis la partie inférieure de la manchette thermique 9 de l'adaptateur constituée par la tulipe d'introduction 9a.

Pour parvenir dans l'espace annulaire 21 à partir de l'espace intérieur de la manchette thermique 9, le sabre de support du dispositif d'examen optique doit être orienté en direction d'un passage 22 de faible largeur (figure 3) ménagé entre une partie périphérique de l'extrémité inférieure de la pièce 14 du plongeur de cliquet de maintien et une partie de l'alésage intérieur du carter 2 de forme tronconique placée entre deux parties à diamètres différents de cet alésage.

L'espace 22 présente une largeur faible de l'ordre de 1,6 mm.

De plus, ce passage 22 se trouve dans une zone périphérique du mécanisme qui n'est pas à l'aplomb de la zone comportant la vis 18.

La lame de support du dispositif d'examen optique doit donc être tout d'abord orientée dans une direction inclinée représentée sur la figure 3 pour être introduite dans le passage 22 puis doit subir une flexion pour pénétrer dans le jeu annulaire 21 et enfin un certain vrillage autour de l'axe 10 pour parvenir dans la zone de la vis 18.

Lors des essais qui ont été effectués sur des mécanismes de réacteur nucléaire à eau sous pression, il s'est avéré que des lames ou sabres métalliques de la technique connue ne pouvaient supporter les déformations nécessaires pour parvenir jusque dans la zone de la vis 18 et qu'il se produisait des blocages ou même des ruptures du ruban, soit lors de son introduction, soit lors de son extraction. Il s'est donc avéré pratiquement impossible d'utiliser des supports de sonde de contrôle d'un type connu pour réaliser l'examen optique des vis de fixation des plongeurs de cliquets de maintien des mécanismes de réacteur nucléaire à eau sous pression.

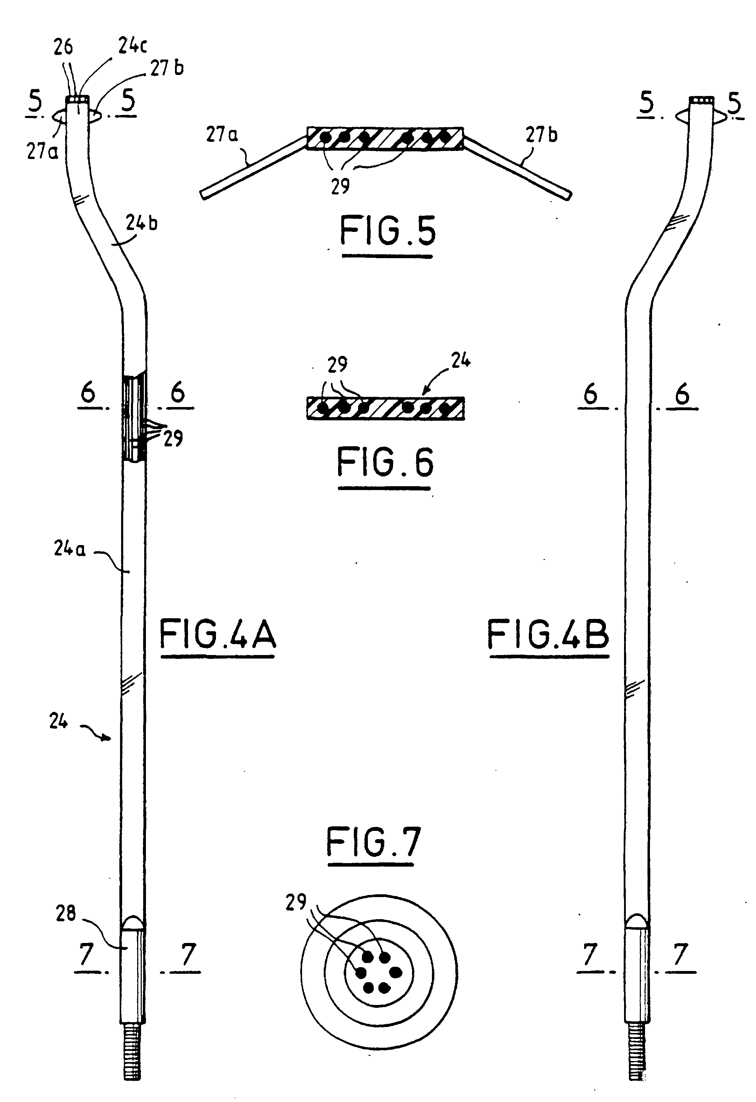

Selon l'invention, on a réalisé une lame de support et de déplacement d'un type nouveau, tel que représenté en particulier sur les figures 4A et 4B.

On ne décrira que la lame représentée sur la figure 4A, la lame représentée sur la figure 4B ne présentant qu'une légère différence de forme, comme il sera expliqué plus loin.

La lame de support et de déplacement désignée de manière générale par le repère 24 sera décrite en se référant aux figures 4A, 5, 6 et 7.

La lame 24 comporte une partie rectiligne 24a de forme plate dont la section est représentée sur la figure 6 et une partie courbe 24b dans le prolongement de la partie rectiligne 24a qui se termine au niveau de la tête d'examen optique 24c portant les éléments optiques 26 du dispositif d'examen fixé à l'extrémité de la lame 24. La tête d'examen optique 24c comporte également deux parties 27a et 27b d'épaisseur plus faible que l'épaisseur de la lame et inclinées par rapport au plan de la lame, d'un même côté de ce plan.

A l'extrémité opposée à la tête d'examen optique 24c, la lame 24 se raccorde à une partie 28 à section circulaire constituant l'extrémité d'un câble de liaison de la lame 24 et d'un ensemble d'exploitation des signaux optiques fournis par les éléments 26.

Les signaux optiques sont transmis entre la tête d'examen optique comportant les éléments optiques 26 et les moyens d'exploitation des signaux, par des faisceaux de fibres optiques 29 disposés à l'intérieur de la lame 24 suivant toute sa longueur.

Chacun des faisceaux de fibres 29 peut comporter un nombre de fibres très important, de l'ordre de 10.000.

La lame 24 est réalisée de manière totalement monobloc en un matériau thermoplastique tel qu'un élastomère.

Les faisceaux de fibres optiques 29 sont totalement noyés dans la matière plastique constituant la lame 24, de telle sorte que les fibres optiques sont totalement isolées du milieu extérieur et ne sont pas susceptibles de venir en contact avec une partie des mécanismes pendant le déplacement de la lame de support entre sa position de service pour l'examen de la vis 18 à l'intérieur des mécanismes et une position de retrait à l'extérieur du mécanisme. On évite ainsi toute détérioration des fibres pendant le déplacement de la lame à l'intérieur des mécanismes.

Les lames 27a et 27b de la tête d'examen optique 24c qui constituent des ressorts d'appui et de maintien de la lame à l'intérieur de l'espace annulaire 21 du mécanisme sont également réalisées en une seule pièce avec le corps de la lame 24 à section rectangulaire.

Dans le cas de mécanismes de déplacement de barres de commande de réacteurs nucléaires à eau sous pression actuellement en service, on a utilisé une lame de support ayant une épaisseur de l'ordre de 1,4 mm, une largeur de 12 mm et une longueur depuis l'extrémité de la partie 28 de la lame jusqu'à l'extrémité de la tête d'examen optique 24c, de l'ordre de 500 mm.

On a utilisé de préférence un polyuréthanne pour constituer le corps de la lame 24 dans lequel sont noyés les faisceaux de fibres optiques 29.

Le polyuréthanne présente l'avantage d'avoir une forte résistance à la traction, une très grande souplesse, un faible coefficient de frottement sur les surfaces métalliques, par exemple en acier, inférieur à 0,1, et une forte résistance à l'usure lorsqu'il est en contact frottant avec des surfaces métalliques.

Les lames réalisées selon l'invention présentant les dimensions mentionnées ci-dessus ont une résistance à la traction de l'ordre de 45 daN. On a pu réaliser et utiliser des lames suivant la technique décrite ayant une résistance comprise entre 20 et 80 daN, ce qui permet d'éviter tout risque de rupture dans les conditions d'utilisation pour le déplacement d'un dispositif d'examen optique à l'intérieur de l'espace annulaire de mécanismes de déplacement de barres de commande.

De plus, les fortes possibilités d'allongement de la lame (500 %) s'accompagnent d'un rétreint important permettant d'éviter tout risque de coincement dans le mécanisme de barre de commande.

Bien entendu, d'autres matières plastiques que le polyuréthanne peuvent être utilisées pour réaliser le corps de la lame et par exemple, les silicones, le polytétrafluoréthylène (Téflon), le polyéthylène ou encore le polypropylène, dans la mesure où ces matières plastiques sont acceptables comme "produits et matériaux utilisables en centrale nucléaire".

Pour effectuer la mise en place d'un dispositif d'examen optique à l'intérieur de l'espace annulaire des mécanismes, au niveau de la vis 18, on a utilisé des lames de support présentant une partie courbe d'extrémité 24b dirigée à gauche, comme représenté sur la figure 4A, ou présentant une partie courbe dirigée à droite, comme représenté sur la figure 4B, suivant la disposition relative du passage 22 de la partie inférieure des mécanismes et de la vis 18, à la périphérie des mécanismes.

La présence d'une partie courbe permet d'éviter d'avoir à effectuer un vrillage hélicoïdal de la lame dans l'espace annulaire des mécanismes, pour parvenir à la vis 18.

Les dispositifs optiques 26 fixés à l'extrémité de la tête d'examen optique 24c comportent des éléments optiques permettant une visée dans la direction axiale pour contrôler que la tête de vis ne se trouve pas en saillie dans l'espace annulaire et des éléments optiques de visée radiale pour fournir une image de la tête de vis et de la coupelle de blocage par sertissage.

Les signaux lumineux récupérés par les fibres des faisceaux 29 dans la zone de la tête de vis qui est éclairée par l'intermédiaire d'un faisceau de fibres sont transmis par des faisceaux de fibres optiques disposés à l'intérieur et suivant la direction longitudinale du corps de la lame de support et de déplacement 24 et à l'intérieur d'un câble optique prolongeant la partie d'extrémité 28 de la lame. Les signaux parviennent ainsi à des moyens d'exploitation permettant de reconstituer une image de la tête de vis en visée axiale et en visée radiale. Ces moyens comportent en particulier des caméras CCD et un ordinateur de traitement.

Les propriétés mécaniques de la lame de support et de déplacement ainsi que sa forme géométrique permettent de faciliter le déplacement de cette lame dans l'espace exigu et non rectiligne constitué par le passage d'introduction de la lame à la partie inférieure des mécanismes et par l'espace annulaire entre le plongeur des cliquets de maintien et la surface intérieure du carter du mécanisme.

Le faible coefficient de frottement de la lame en polyuréthanne sur l'acier, ce coefficient étant inférieur à 0,1, ainsi que les fortes possibilités d'allongement de la lame (500 %) permettent de faciliter l'introduction et le déplacement de la lame dans l'espace exigu et non rectiligne du mécanisme. L'allongement, le rétreint et le comportement élastique de la lame permettent d'autre part un dégagement de cette lame, en cas de coincement dans une partie de l'espace exigu non rectiligne d'accès à la vis 18. D'autre part, la lame présente une bonne rigidité longitudinale.

En outre, la résistance à la traction de la lame de support en polyuréthanne qui est de l'ordre de 45 daN, dans le cas du mode de réalisation décrit, permet d'éviter des risques de rupture de la lame à l'intérieur d'un mécanisme.

La déflexion et l'introduction de la lame dans le passage d'accès à l'espace annulaire du mécanisme sont réalisées par un dispositif introduit à l'intérieur de la manchette thermique de l'adaptateur.

Ce dispositif fait l'objet d'une demande de brevet déposée le même jour que la présente demande.

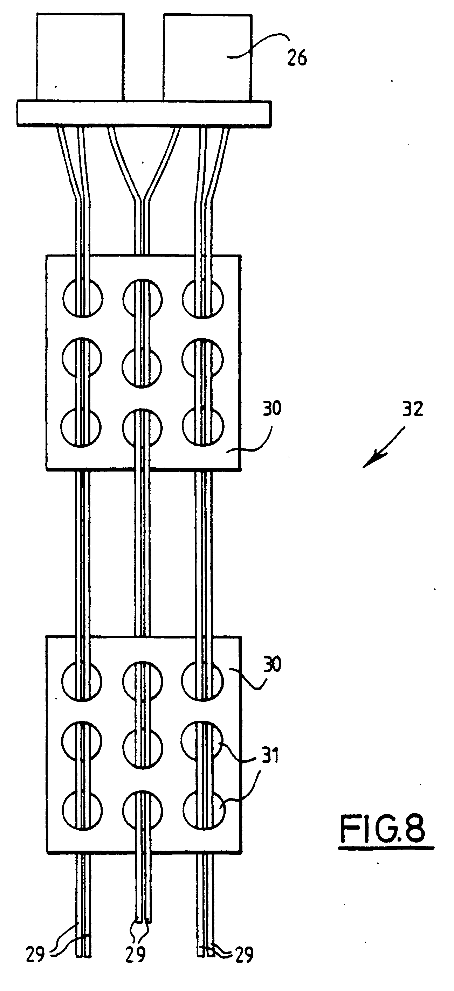

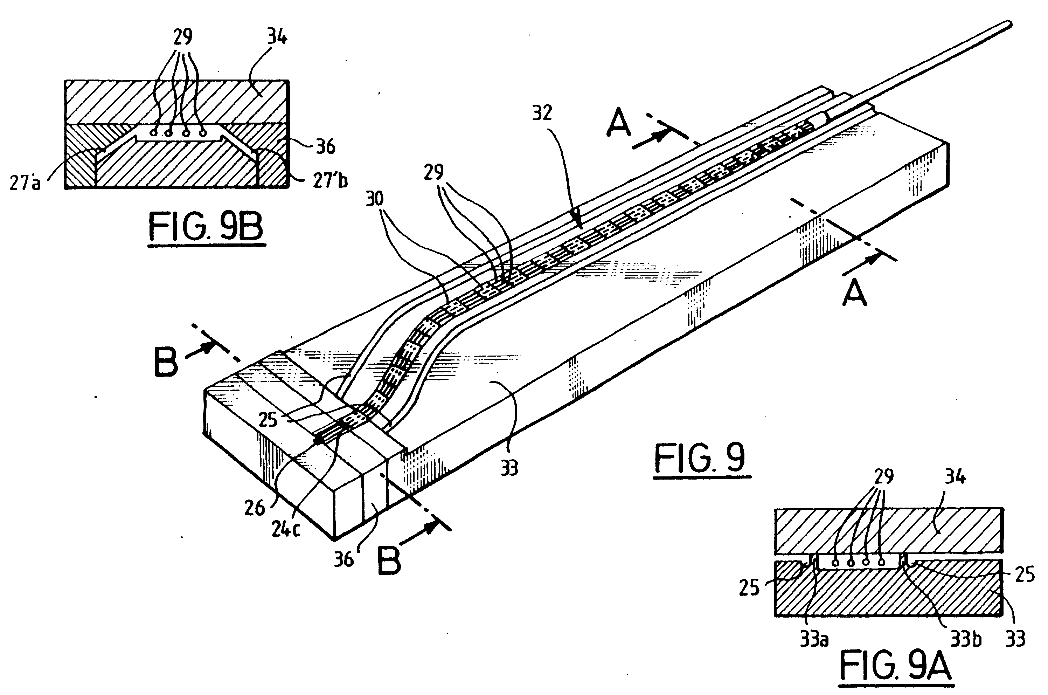

On va maintenant décrire, en se référant aux figures 8 et 9, un procédé de réalisation de la lame de support et de déplacement selon l'invention en utilisant un procédé de moulage d'une matière plastique.

La lame comporte en particulier un noyau ou insert constitué par les faisceaux de fibres optiques 29 et des moyens de maintien de ces faisceaux de fibres dans des dispositions parallèles suivant la direction longitudinale de la lame de support.

Sur la figure 8, on a représenté le noyau ou insert constitué par des faisceaux de fibres optiques (six faisceaux de fibres optiques parallèles ont été représentés sur la figure 8) et des plaquettes 30 de maintien des faisceaux de fibres optiques 29 groupés deux par deux, dans des dispositions parallèles suivant la direction longitudinale de la lame.

Les plaquettes 30 peuvent être constituées par des plaquettes de polyuréthanne percées de manière à présenter un réseau d'ouvertures 31 dans lesquelles sont engagés les faisceaux de fibres optiques 29 qui sont ainsi maintenus dans des dispositions parallèles entre eux.

A l'une des extrémités des faisceaux de fibres optiques 29 sont fixés des moyens optiques 26 permettant de capter les signaux optiques qui sont ensuite transmis par les fibres des faisceaux 29 aux moyens de traitement et de reconstitution d'images.

Les faisceaux de fibres 29 se prolongent, à l'extrémité de la lame opposée à la tête d'examen optique 24c comportant les moyens optiques 26, à l'intérieur d'un câble optique à section circulaire (voir figure 7).

Comme il est visible sur la figure 9, pour réaliser par moulage une lame de support et de déplacement suivant l'invention, on place le noyau ou insert 32 de la lame constitué par les faisceaux de fibres 29 et les plaquettes de maintien 30, à l'intérieur de la cavité d'un moule 33. L'insert 32 est mis en forme de manière à présenter une partie courbe à l'extrémité de laquelle sont fixés les moyens optiques 26 de la tête d'examen optique 24c.

Comme il est visible sur les figures 9A et 9B, le moule peut être fermé par un couvercle 34 venant reposer sur la surface supérieure du moule 33 suivant deux parties d'appui 33a et 33b de surface réduite. Le couvercle 34 assure la fermeture de la cavité du moule dans laquelle est introduit l'insert 32 comportant en particulier les faisceaux de fibres 29.

A l'une de ses extrémités, le moule 33 comporte une pièce rapportée 36 dans laquelle est usinée une partie de la cavité du moule qui est prolongée latéralement par des cavités obliques constituant les empreintes de moulage 27'a et 27'b des ressorts 27a et 27b, comme il est visible sur la figure 9B.

Des canaux 25 de récupération du produit polymérisable en excès, pendant le moulage, sont placés de part et d'autre de la cavité du moule.

Il est possible de remplir la cavité du moule de manière à entourer complètement l'insert par une préparation polymérisable qui est ensuite polymérisée pour réaliser une lame d'une matière souple entourant complètement l'insert. Pour cela, on réalise le préchauffage du moule 33 et du couvercle 34 ainsi que du produit polymérisable, en les plaçant dans une étuve à une température de 30 à 35°C. Ensuite, on remplit le moule de matière polymérisable et on referme le couvercle 34. Le moule renfermant la matière polymérisable et fermé par son couvercle est placé dans une étuve, à une température de 35 à 40°C, pour une durée d'environ 24 heures.

Après remplissage du moule et au moment de la fermeture du couvercle, du produit polymérisable en excès dans la cavité du moule est chassé latéralement sur les parties d'appui 33a et 33b de la surface supérieure du moule 33 pour être évacué par les canaux 25.

Le maintien de la matière polymérisable à une température de 35 à 40°C, à l'intérieur de la cavité du moule permet de réaliser la polymérisation et le durcissement de la matière polymérisable. On obtient ainsi une lame de polyuréthanne dans laquelle sont noyés les faisceaux de fibres optiques 29 et les plaquettes d'espacement 30.

La mise en oeuvre du procédé a montré que le polyuréthanne est parfaitement adhérent sur les fibres et sur les plaquettes d'espacement. L'introduction de polyuréthanne dans les ouvertures 31 des plaquettes 30 ainsi que l'enrobage des faisceaux de fibres 29 dans le polyuréthanne permet de réaliser une liaison très résistante entre la matière plastique de la lame et les éléments qui sont fixés à l'intérieur de la lame. En outre, la réalisation sous forme monobloc de la lame et en particulier, la réalisation en une seule pièce de la lame et des ressorts 27a, 27b permet d'éviter tout risque qu'un élément de la lame ne se détache à l'intérieur des mécanismes, pendant l'examen optique. Les éléments du dispositif d'examen pénétrant dans les mécanismes sont donc totalement imperdables. Cette imperdabilité ne pourrait être obtenue que très difficilement dans le cas d'une lame en métal.

Bien entendu, il serait possible de réaliser le moulage de la lame en matière plastique ou élastomère d'une autre manière, par exemple en injectant la matière plastique à chaud dans un moule fermé renfermant l'insert. Dans tous les cas, le moulage est réalisé de manière à enrober totalement les faisceaux de fibres optiques et les plaquettes d'espacement dans la lame en matière plastique ou élastomère.

L'invention ne se limite pas au mode de réalisation qui a été décrit. C'est ainsi qu'on peut utiliser d'autres matières que le polyuréthanne pour réaliser le corps de la lame entourant les faisceaux de fibres optiques.

Les plaquettes d'espacement et de maintien des conducteurs peuvent être réalisées en une matière identique à la matière constituant le corps de la lame ou en une matière différente.

Les inserts disposés à l'intérieur du moule de formage de la lame et qui constituent, après moulage, des éléments internes de la lame peuvent avoir des formes et des agencements différents de ceux qui ont été décrits.

On peut donner toute forme et toutes dimensions à la lame, de manière à faciliter l'accès d'un dispositif d'examen fixé à l'extrémité de cette lame dans une zone d'examen située dans un passage exigu et non rectiligne.

L'invention s'applique à des examens optiques d'objets différents de vis de fixation de pièces constitutives de plongeurs de cliquets de mécanismes de déplacement de barres de commande. En particulier, la lame de support et de déplacement suivant l'invention peut être utilisée pour effectuer des examens optiques ou des contrôles dans de nombreuses parties d'un réacteur nucléaire ou encore dans d'autres installations industrielles comportant des éléments dont on doit effectuer l'examen ou le contrôle et accessibles par des passages exigus et non rectilignes.

## Revendications

1. Lame de support et de déplacement dans un passage (21) exigu et non rectiligne, d'un dispositif d'examen ou de contrôle (26) d'un élément d'une installation industrielle accessible par le passage exigu (21), fixé à l'une des extrémités longitudinales de la lame de support (24) et relié, pour son alimentation et pour la récupération de signaux, à une pluralité de conducteurs (29), disposés suivant la longueur de la lame (24), **caractérisée par le fait qu'**elle est constituée par une pièce monobloc en une matière plastique moulée, ayant une une résistance à la traction comprise entre 20 et 80 daN et de préférence de l'ordre de 45daN ainsi qu'un coefficient de frottement sur l'acier inférieur à 0,1 et une forte résistance à l'usure dans le cas d'un frottement avec une surface métallique, les conducteurs (29) reliés au dispositif d'examen ou de contrôle (26) étant entièrement enrobés dans la matière plastique de la lame (24), sur toute la longueur de la lame (24).

2. Lame de support et de déplacement suivant la revendication 1, **caractérisée par le fait que** les conducteurs (29) sont constitués par des faisceaux de fibres optiques et que le dispositif d'examen (26) est un dispositif d'examen optique.

3. Lame de support suivant l'une quelconque des revendications 1 et 2, **caractérisée par le fait que** la matière polymère de la lame (24) est du polyuréthanne.

4. Lame de support suivant l'une quelconque des revendications 1 à 3, **caractérisée par le fait qu'**elle comporte à l'une de ses extrémités une tête d'examen optique ou de contrôle (24c) portant des éléments d'examen optique (26) ou des éléments de contrôle et comprenant des prolongements latéraux (27a, 27b) réalisés en une seule pièce avec la lame de support et inclinés par rapport aux faces de la lame (24), constituant des ressorts de maintien de la tête (24c) d'examen optique ou de contrôle dans le passage exigu (21).

5. Lame de support suivant l'une quelconque des revendications 1 à 4, **caractérisée par le fait qu'**elle comporte successivement, suivant sa longueur, une partie rectiligne (24a) et une partie courbe (24b) à l'extrémité de laquelle est fixé le dispositif d'examen ou de contrôle (26).

6. Lame de support suivant la revendication 5, **caractérisée par le fait que** les conducteurs (29) sont disposés, dans le prolongement de la lame (24) à partir de l'extrémité de la lame opposée à l'extrémité portant le dispositif d'examen ou de contrôle, à l'intérieur d'un câble à section circulaire.

7. Procédé de fabrication d'une lame de support et de déplacement suivant l'une quelconque des revendications 1 à 6, **caractérisé par le fait :**
- **qu'**on réalise un noyau ou insert comportant les conducteurs (29) placés dans des dispositions sensiblement parallèles,
- **qu'**on place le noyau ou insert (32) dans un moule (33) ayant une cavité présentant la forme de la lame de support à réaliser, et
- **qu'**on réalise le moulage d'une matière plastique dans le moule autour du noyau ou insert.

8. Procédé suivant la revendication 7, **caractérisé par le fait qu'**on remplit le moule d'une matière polymérisable et qu'on polymérise la matière polymérisable à l'intérieur du moule.

9. Procédé suivant la revendication 8, **caractérisé par le fait qu'**on remplit le moule (33) porté à une température de 30 à 35°C d'une préparation polymérisable destinée à former un polyuréthanne, à une température de 30 à 35° et qu'on polymérise la matière polymérisable à l'intérieur du moule à une température comprise entre 35 et 40°.

10. Procédé suivant l'une quelconque des revendications 7 à 9, **caractérisé par le fait que** le noyau ou insert comporte des plaques d'espacement (30) traversées par un réseau d'ouvertures (31) dans lesquelles les conducteurs (29) sont engagés dans des dispositions parallèles, les plaques d'espacement (30) étant espacées l'une de l'autre suivant la direction longitudinale des conducteurs (29).

11. Procédé suivant la revendication 10, **caractérisé par le fait que** les plaques d'espacement (30) sont en une matière plastique identique à la matière de la pièce monobloc moulée de la lame de support et de déplacement (24).

12. Utilisation d'une lame de support et de déplacement suivant l'une quelconque des revendications 1 à 6, pour réaliser un examen optique d'un élément (18) à l'intérieur d'un carter (2) d'un mécanisme (1) de déplacement d'une barre de commande d'un réacteur nucléaire à eau sous pression.

13. Utilisation suivant la revendication 12, **caractérisée par le fait que** l'élément (18) est une vis d'assemblage de deux pièces (14, 15) d'un plongeur de cliquet de maintien du mécanisme (1) actionné par un bobinage électromagnétique (3c).

## Patentansprüche

1. Lamelle zum Tragen und Verschieben, in einem engen und nicht geradlinigen Durchlaß (21), einer Untersuchungs- oder Kontröllvorrichtung (26) für ein durch den engen Durchlaß (21) zugängliches Element einer Industrieanlage, die an einem der Längsenden der Trägerlamelle (24) befestigt und für ihre Stromzuführ und das Auffangen von Signalen mit mehreren Leitern (29) verbunden ist, die entlang der Länge der Lamelle (24) angeordnet sind, **dadurch gekennzeichnet, daß** sie aus einem einstückigen Bauteil aus einem geformten Kunststoffmaterial besteht, das eine Zugfestigkeit zwischen 20 und 80 daN, und vorzugsweise in der Größenordnung von 45 daN, sowie einen Reibungskoeffizienten auf Stahl von weniger als 0,1 und eine hohe Abnutzungsfestigkeit im Fall eines Reibkontakts mit einer metallischen Oberfläche aufweist, wobei die mit der Untersuchungs- oder Kontrollvorrichtung (26) verbundenen Leiter (29) über die ganze Länge der Lamelle (24) vollständig vom Kunststoffmaterial der Lamelle (24) umhüllt sind.

2. Träger- und Verschiebelamelle nach Anspruch 1, **dadurch gekennzeichnet, daß** die Leiter (29) aus Bündeln von Lichtleitfasern bestehen, und daß die Untersuchungsvorrichtung (26) eine optische Untersuchungsvorrichtung ist.

3. Trägerlamelle nach einem der Ansprüche 1 und 2, **dadurch gekennzeichnet, daß** das Polymermaterial der Lamelle (24) Polyurethan ist.

4. Trägerlamelle nach einem der Ansprüche 1 bis 3, **dadurch gekennzeichnet, daß** sie an einem ihrer Enden einen Kopf (24c) für eine optische Untersuchung oder Kontrolle aufweist, der Elemente (26) für die optische Untersuchung oder Kontrollelemente trägt und seitliche Verlängerungen (27a, 27b) aufweist, die in einem Stück mit der Trägerlamelle hergestellt werden und in bezug auf die Flächen der Lamelle (24) geneigt sind und Haltefedern für den Kopf (24c) für die optische Untersuchung oder Kontrolle im engen Durchlaß (21) bilden.

5. Trägerlamelle nach einem der Ansprüche 1 bis 4, **dadurch gekennzeichnet, daß** sie nacheinander entlang ihrer Länge einen geradlinigen Bereich (24a) und einen gekrümmten Bereich (24b) aufweist, an dessen Ende die Vorrichtung zur Untersuchung oder Kontrolle (26) befestigt ist.

6. Trägerlamelle nach Anspruch 5, **dadurch gekennzeichnet, daß** die Leiter (29) in der Verlängerung der Lamelle (24) ausgehend von dem Ende der Lamelle entgegengesetzt zu demjenigen, welches die Untersuchungs- oder Kontrollvorrichtung trägt, im Inneren eines Kabels mit kreisförmigem Querschnitt angeordnet sind.

7. Verfahren zur Herstellung einer Träger- und Verschiebelamelle nach einem der Ansprüche 1 bis 6, **dadurch gekennzeichnet, daß**
- ein Kern oder Einsatz hergestellt wird, der die Leiter (29) aufweist, die in im wesentlichen parallelen Anordnungen eingesetzt sind,
- der Kern oder Einsatz (32) in eine Form (33) mit einem Hohlraum gebracht wird, der die Form der herzustellenden Trägerlamelle hat, und
- das Formen eines Kunststoffmaterials in der Form um den Kern oder Einsatz herum durchgeführt wird.

8. Verfahren nach Anspruch 7, **dadurch gekennzeichnet, daß** die Form mit einem polymerisierbaren Material gefüllt und das polymerisierbare Material innerhalb der Form polymerisiert wird.

9. Verfahren nach Anspruch 8, **dadurch gekennzeichnet, daß** die auf eine Temperatur von 30 bis 35°C gebrachte Form (33) mit einer polymerisierbaren Zubereitung mit einer Temperatur von 30 bis 35°C gefüllt wird, die ein Polyurethan bilden soll, und das polymerisierbare Material innerhalb der Form bei einer Temperatur zwischen 35 und 40°C polymerisiert wird.

10. Verfahren nach einem der Ansprüche 7 bis 9, **dadurch gekennzeichnet, daß** der Kern oder Einsatz Abstandshalterplatten (30) aufweist, die von einem Netz von Öffnungen (31) durchquert werden, in die die Leiter (29) in parallelen Anordnungen eingeführt sind, wobei die Abstandshalterplatten (30) in Längsrichtung der Leiter (29) einen Abstand zueinander aufweisen.

11. Verfahren nach Anspruch 10, **dadurch gekennzeichnet, daß** die Abstandshalterplatten (30) aus einem Kunststoffmaterial gleich dem Material des einstückigen geformten Bauteils der Trägerund Verschiebelamelle (24) geformt sind.

12. Verwendung einer Träger- und Verschiebelamelle nach einem der Ansprüche 1 bis 6 zur Durchführung einer optischen Untersuchung eines Elements (18) innerhalb eines Gehäuses (2) eines Mechanismus (1) zur Verschiebung eines Steuerstabs eines Druckwasser-Kernreaktors.

13. Verwendung nach Anspruch 12, **dadurch gekennzeichnet, daß** das Element (18) eine Schraube zum Zusammenbau von zwei Teilen (14, 15) eines Kolbens einer Halteklinke des Mechanismus (1) ist, die von einer elektromagnetischen Wicklung (3c) betätigt wird.

## Claims

1. Movable member for supporting in a narrow passage (21) which is not straight, a device (26) for examining and inspecting a part of an industrial installation accessible through the narrow passage (21), fixed to one of the longitudinal ends of the supporting part (24) and connected, to supply it and recover signals, to a number of conductors (29), arranged to suit the length of the member (24), **characterised in that** it consists of a one-piece part made from a moulded plastic material, having a tensile strength between 20 and 80 daN and preferably in the region of 45 daN, as well as a coefficient of friction on steel below 0.1 and a high resistance to wear in the case of rubbing on a metal surface, the conductors (29) connected to the examining or inspecting device (26) being entirely wrapped in the plastic material of the member (24) over the full length of the member (24).

2. Movable support member according to Claim 1, **characterised in that** the conductors (29) consist of fibre optic bundles and that the examining device (26) is an optical examination device.

3. Support member according to any one of the claims 1 and 2, **characterised in that** the polymer material of the member (24) is polyurethane.

4. Support member according to any one of the Claims 1 to 3, **characterised in that** it has at one of its ends an optical examination or inspection head which takes optical examination parts (26) or inspection parts and has lateral extensions (27a, 27b) made integral with the support member and at an angle to the faces of the member (24), consisting of springs for holding the optical examination or inspection head (24c) in the narrow passage (21).

5. Support member according to any one of the Claims 1 to 4, **characterised in that** it has in succession, along its length, a straight section (24a) and a curved section (24b) to the end of which the examination or inspection device (26) is fixed.

6. Support member according to Claim 5, **characterised in that** the conductors (29) are arranged, in the extension of the member (24) as from the end of the member opposite to the end taking the examination or inspection device, inside a cable with a circular section.

7. Process for manufacturing a movable support member according to any one of the Claims 1 to 6, **characterised in that**:
- a core or insert is made consisting of conductors (29) fitted into more or less parallel arrangements,
- the core or insert (32) is placed in a mould (33) which has a cavity in the shape of the support member to be made, and
- a plastic material is moulded in the mould around the core or insert.

8. Process according to Claim 7, **characterised in that** the mould is filled with a polymerisable material and that material is polymezised inside the mould.

9. Process according to Claim 8, **characterised in that** the mould (33), brought to a temperature of 30 to 35°C is filled with a polymerisable preparation intended to form a polyurethane, at a temperature of 30 to 35°, and that the polymerisable material is polymerised inside the mould at a temperature between 35 and 40° inclusive.

10. Process according to any one of the Claims 7 to 9, **characterised in that** the core or insert has spacer plates (30) with a series of apenings (31) in which the conductors (29) are engaged in parallel arrangements, the spacer plates (30) being spaced from each other in the longitudinal direction of the conductors (29).

11. Process according to Claim 10, **characterised in that** the spacer plates (30) are from a plastic material identical with the material of the one-piece part of the movable support member (24).

12. Application of a movable support member according to any one of the Claims 1 to 6 to perform an optical examination of an element (18) inside a casing (2) of a mechanism (1) for moving a control rod of a pressurised water nuclear reactor.

13. Application according to Claim 12, **characterised in that** the element (18) is a screw for assembling two parts (14, 15) of a pawl plunger for holding the mechanism (1) activated by an electromagnetic coil (3c).
